# EUROPEAN PATENT APPLICATION

(11) **EP 2 908 226 A1**
(43) Date of publication of application: **19.08.2015**
(21) Application number: 13799792.0
(22) Date of filing: 11.07.2013
(51) Int. Cl.: G06F 3/041

(54) **SCREEN STATE CONTROL METHOD, DEVICE, AND TOUCHSCREEN TERMINAL**

(30) Priority: 12.11.2012 CN 201210450472
(71) Applicant: ZTE Corporation, Shenzhen, Guangdong 518057 (CN)
(72) Inventor: TANG, Kaiping, Shenzhen Guangdong 518057 (CN)
(74) Representative: Willquist, Sofia Ellinor
(86) International application number: PCT/CN2013/079185
(87) International publication number: WO 2013/182117

(57) **Abstract**

An embodiment of the present invention provides a screen state control method, device and a touchscreen terminal, the screen state control method is used for the touchscreen terminal, and the touchscreen terminal includes: a piezoresistive pressure sensor placed below a screen of the terminal, wherein a metal resistance strain gauge is adsorbed onto a substrate material of the piezoresistive pressure sensor; the screen state control method includes: generating an analog signal according to a pressure on the terminal screen; converting the analog signal into a digital signal; and controlling the screen state of the terminal to switch between on and off according to the digital signal.

## Description

### Technical Field

The present invention relates to the field of communications, and more particularly, to a screen state control method, device and a touchscreen terminal.

### Background of the Related Art

Currently the mobile phone screen is turned on mainly through a physical power button operation, and a physical button is easy to wear due to long time use, and because of the difference in material, size, placement and user palm size, the ease of use and availability of the physical button have a relatively big difference. As the mobile phone becomes increasingly intelligent, the number of physical function buttons on the phone will be gradually reduced, and it will be more and more inconvenient to turn on or off the phone screen with the physical power button.

### Summary of the Invention

The embodiment of the present invention provides a screen state control method, device and a touchscreen terminal to control the screen state to switch between on and off without a physical power button operation.

A screen state control method provided in an embodiment of the present invention comprises:
a piezoresistive pressure sensor placed below a screen of a touchscreen terminal generating an analog signal according to a pressure on the screen of the touchscreen terminal;
converting the analog signal into a digital signal;
controlling a screen state of the touchscreen terminal to switch between on and off according to the digital signal.

Preferably, the step of generating an analog signal according to a pressure on the screen of the touchscreen terminal comprises: generating a voltage analog signal according to the pressure on the screen of the touchscreen terminal.

Preferably, the step of controlling a screen state of the terminal to switch between on and off according to the digital signal comprises: controlling a screen control switching circuit of the touchscreen terminal to switch between off and on in accordance with the digital signal.

Preferably, the digital signal is a pulse signal;
the step of controlling a screen control switching circuit of the touchscreen terminal to switch between on and off in accordance with the digital signal comprises:
judging whether a time interval of two adjacent pulse signals generated is less than a first predetermined time, to obtain a first judgment result;
when the first judgment result indicates that the time interval of two adjacent pulse signals generated is less than the first predetermined time, sending the pulse signal to the screen control switching circuit so that the switching circuit switches between on and off in accordance with the pulse signal.

Preferably, the step of controlling a screen control switching circuit of the terminal to switch between on and off in accordance with the digital signal comprises:
triggering displaying of a display icon according to the digital signal;
judging whether the display icon is clicked within a second predetermined time, to obtain a second judgment result;
when the second judgment result indicates that the display icon is clicked within the second predetermined time, sending a triggering signal to the screen control switching circuit so that the switching circuit can switch between on and off in accordance with the triggering signal.

The embodiment of the present invention further provides a screen state control device used for a touchscreen terminal, and the screen state control device comprises:
a signal generating module, configured to: generate an analog signal according to a pressure on a screen of the touchscreen terminal;
a signal converting module, configured to: convert the pressure signal into a digital signal; and
a controlling module, configured to: control a screen state of the touchscreen terminal to switch between on and off according to the digital signal.

Preferably, the signal generating module is configured to: generate a voltage analog signal through a piezoresistive pressure sensor according to the pressure on the terminal screen.

Preferably, the controlling module is configured to: control a screen control switching circuit of the touchscreen terminal to switch between on and off in accordance with the digital signal.

Preferably, the digital signal is a pulse signal;
the controlling module comprises:
a first judging module, configured to: judge whether a time interval of two adjacent pulse signals generated is less than a first predetermined time, to obtain a first judgment result;
a first sending module, configured to: when the first judgment result indicates that the time interval of two adjacent pulse signals generated is less than the first predetermined time, send the pulse signal to the screen control switching circuit so that the screen switching circuit switches between on and off in accordance with the pulse signal.

Preferably, the controlling module comprises:
a triggering module, configured to: trigger displaying of a display icon according to the digital signal;
a second judging module, configured to: judge whether the display icon is clicked in a second predetermined time, to obtain a second judgment result;
a second sending module, configured to: when the second judgment result indicates that the display icon is clicked within the second predetermined time, send a triggering signal to the screen control switching circuit so that the switching circuit can switch between on and off in accordance with the triggering signal.

The embodiment of the present invention further provides a touchscreen terminal, comprising: a piezoresistive pressure sensor, and the piezoresistive pressure sensor comprises a metal resistance strain gauge, wherein the piezoresistive pressure sensor is placed below the screen of the touchscreen terminal, and the metal resistance strain gauge is adsorbed on a substrate material of the piezoresistive pressure sensor;
the touchscreen terminal further comprises an A/D converter and a signal processor, wherein,
the piezoresistive pressure sensor is configured to: generate a voltage analog signal according to the pressure on the screen of the touchscreen terminal;
the A/D converter is configured to: convert the voltage analog signal into a digital signal;
the signal processor is configured to: control a screen state of the touchscreen terminal to switch between on and off according to the digital signal.

Preferably, the signal processor comprises a screen control switching circuit, and the signal processor is configured to: control the screen control switching circuit of the touchscreen terminal to switch between on and off according to the digital signal.

Preferably, the signal processor further comprises a display driving module and a region display controlling module;
the display driving module is configured to: send a triggering signal to the region display controlling module after receiving the digital signal;
the region display controlling module is configured to: display an icon at a position clicked on the screen after receiving the triggering signal, and send a control signal to the screen control switching circuit after the icon is clicked;
the screen control switching circuit is configured to: when receiving the control signal when the screen state is on, turn off the screen; when receiving the control signal when the screen state is off, turn on the screen.

The embodiment of the present invention has the following advantageous effects:
the embodiment of the present invention can control the screen state to switch between on and off without a physical power button operation, which is more convenient, simpler and does not have physical wear and tear caused by long-time use, thus greatly enhancing the user experience satisfaction;
the embodiment of the present invention uses the resistance strain gauge currently widely used in the piezoresistive pressure sensor to sense operations on the terminal screen to obtain an analog signal, which has a very low price, high accuracy and good linearity.

### Brief Description of the Drawings

FIG. 1 is a schematic diagram of the process of a screen state control method in accordance with an embodiment of the present invention;
FIG. 2 is a schematic diagram of the process of a method for tuning on or off a cell phone screen in accordance with an embodiment of the present invention;
FIG. 3 is a schematic diagram of the process of another method for tuning on or off a cell phone screen in accordance with an embodiment of the present invention;
FIG. 4 is a schematic diagram of the process of still another method for tuning on or off a cell phone screen in accordance with an embodiment of the present invention;
FIG. 5 is a schematic diagram of a structure of a screen state control device in accordance with an embodiment of the present invention;
FIG. 6 is a schematic diagram of a structure of a touchscreen terminal in accordance with an embodiment of the present invention.

### Preferred Embodiments of the Invention

Hereinafter, in conjunction with the accompanying drawings and specific embodiments, the present invention will be described in detail. It should be noted that, in the case of no conflict, embodiments and features in the embodiments of the present application may be arbitrarily combined with each other.

Pressure sensors have been widely used in industrial and medical practices. There are mainly resistance strain gauge pressure sensors, semiconductor strain gauge pressure sensors, piezoresistive pressure sensors, inductive pressure sensors, capacitive pressure sensors, resonant pressure sensors and capacitive acceleration sensors. However, the most widely used are the piezoresistive pressure sensors, and they have a very low price, high accuracy and good linearity.

The piezoresistive pressure sensor comprises an important element - resistance strain gauge. The resistance strain gauge is a sensitive device converting a strain variation on the DUT into an electrical signal. The most widely used resistance strain gauges are metal resistance strain gauges and semiconductor strain gauges. The metal resistance strain gauges further have filamentous strain gauges and metal foil-like strain gauges. Usually the strain gauge is tightly bonded on the substrate where the mechanical strain occurs through a special binder, when the substrate is stressed to generate a strain change, the resistance strain gauge is deformed together, so that the resistance of the strain gauge changes, and the voltage applied to the resistor changes. The resistance change generated when these strain gauges are stressed is usually small, and in general, these strain gauges constitute a strain bridge, and the signal is amplified by a follow-up instrument amplifier, and then transmitted to the processing circuit.

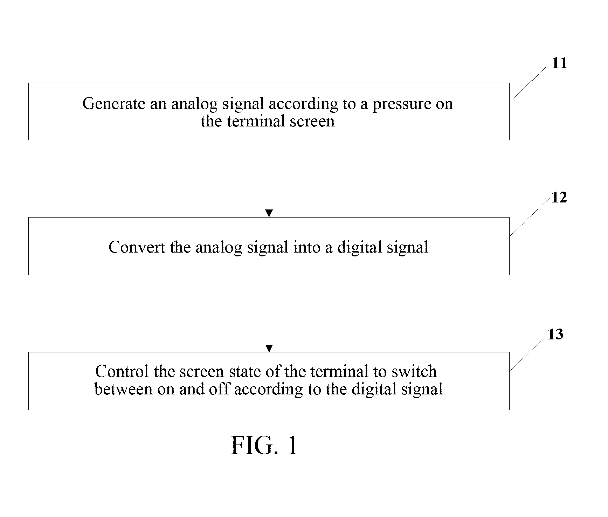

The embodiment of the present invention provides a screen state control method used for a touchscreen terminal, the touchscreen terminal comprises: a piezoresistive pressure sensor placed below a screen of the terminal, wherein the metal resistance strain gauge is adsorbed on the substrate material of the piezoresistive pressure sensor;
the screen state control method, as shown in FIG. 1, comprises:
in step 11, it is to generate an analog signal according to a pressure on the terminal screen;
in step 12, it is to convert the analog signal into a digital signal;
in step 13, it is to control the screen state of the terminal to switch between on and off according to the digital signal.

First, it is to generate an analog signal according to a pressure on the terminal screen; convert the analog signal into a digital signal; control the screen state of the terminal to switch between on and off according to the digital signal. The abovementioned process can control the screen state to switch between on and off without the physical power button operation.

The embodiment of the present invention uses the piezoresistive pressure sensor to sense operations on the terminal screen:
It is to place the substrate material of the piezoresistive pressure sensor below the screen glass of the terminal, the metal resistance strain gauge is adsorbed on the substrate material. A finger continuously clicks twice on the screen (clicking twice in a row may be continuously clicking the same position on the screen, or clicking two different positions on the screen), or clicks on the screen once and then quickly slides on the screen once (or draws a circle, which can be a perfect circle or ellipse, around the clicked position), the sensitive element, metal resistance strain gauge, placed below the substrate changes with pressure to make the resistance of the resistance strain gauge change, and the resistance change of the resistance strain gauge results in a change in the voltage across its two ends.

In step 12, it is to convert a voltage signal across the two ends of the metal resistance strain gauge into a digital signal.

Since the resistance change generated when the strain gauge is stressed is usually small, the corresponding change in the voltage across the two ends is also relatively small, and generally these strain gauges constitute a strain bridge, the signal is amplified by a follow-up instrument amplifier, and then A/D conversion is performed.

Using the resistance strain gauge in the current widely used piezoresistive pressure sensor to sense an operation on the terminal screen to obtain an analog signal has very low price, high accuracy and good linearity.

The switching of the state of the terminal screen between on and off is mainly controlled by the screen control switching circuit, and therefore, in the step 13, the screen control switching circuit of the terminal can be controlled to switch between on and off according to the digital signal.

The embodiment of the present invention provides an implementation mode of the step 13:
<Mode one> the digital signal is a pulse signal;
the step 13 comprises:
judging whether a time interval of two adjacent pulse signals generated is less than a first predetermined time to obtain a first judgment result;
when the first judgment result indicates that the time interval of two adjacent pulse signals generated is less than the first predetermined time, sending the pulse signal to the screen control switching circuit so that the switching circuit switches between on and off in accordance with the pulse signal.

The digital signal is a pulse signal, it is to judge whether the time interval of two adjacent pulse signals generated is less than the first predetermined time, herein the first predetermined time can be 0.2s-0.5s, only when the time interval of two adjacent pulse signals generated is less than the first predetermined time, is the pulse signal sent to the screen control switching circuit, so that the switching circuit switches between on and off in accordance with the pulse signal.

Judging whether the time interval of two adjacent pulse signals generated is less than the first predetermined time is to avoid a conflict with an operation by the user on another application by touching the terminal screen, which makes it impossible to judge whether the user is to change the state of the terminal screen or performs an operation on another application.

Meanwhile, the embodiment of the present invention further provides another method for controlling the screen state of the terminal according to the digital signal, which also can avoid a conflict with an operation by the user on another application by touching the terminal screen.
<Mode two> the step 13 comprises:
   It is to trigger displaying of a display icon according to the digital signal;
   It is to judge whether the display icon is clicked in the second predetermined time, to obtain a second judgment result;
   when the second judgment result indicates that the display icon is clicked within the second predetermined time, it is to send a triggering signal to the screen control switching circuit so that the switching circuit can switch between on and off in accordance with the triggering signal.

The displaying of the display icon is triggered according to the digital signal, and the display icon may comprise a statement prompting the user whether to turn on or off the phone screen, when the user clicks the display icon within the second predetermined time, a triggering signal is sent to the screen control switching circuit, so that the switching circuit turns off or on according to the triggering signal. Herein the second predetermined time can be 1-2s, if the user does not click the display icon within the second predetermined time, the screen returns to the original state.

Through the abovementioned process, the user can directly choose whether to turn on or off the phone screen without causing interference to other operations.

Currently, the mobile phone turning on or off the screen is achieved mainly through a physical power button operation, and the physical buttons bring a lot of inconveniences due to their materials, sizes, hardness of the buttons and other factors, at the same time, different groups of peoples have different palm sizes, resulting in that the availability of physical buttons is difficult to meet various needs of users. The embodiment of the present invention implements the operation of turning on or off the phone screen through the circuit signal change produced by the touch screen in conjunction with the piezoresistive pressure sensor technology, thus greatly enhancing the user experience satisfaction.

Hereinafter, in conjunction with examples, the implementation modes of the screen state control method provided in the embodiment of the present invention will be further described.

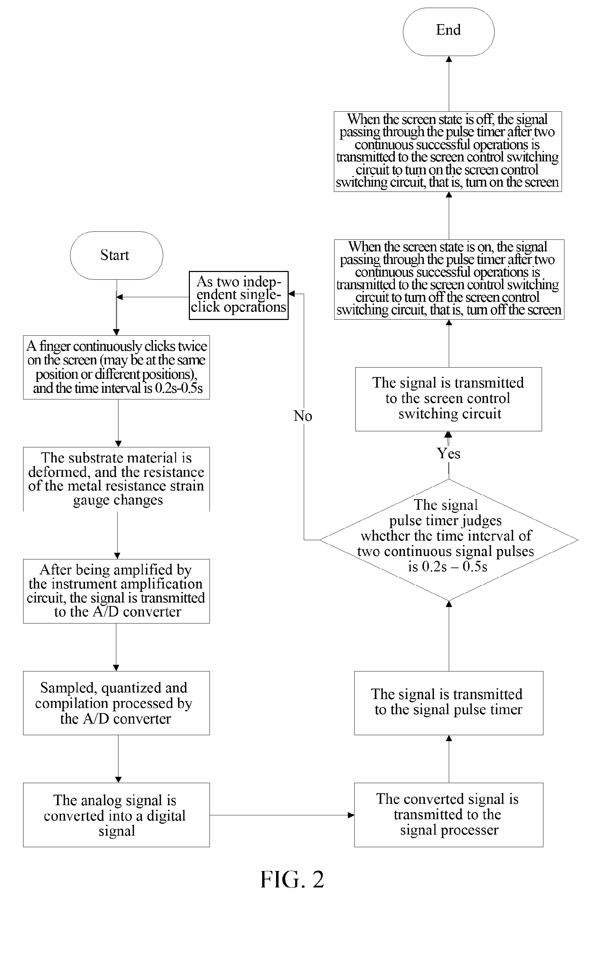

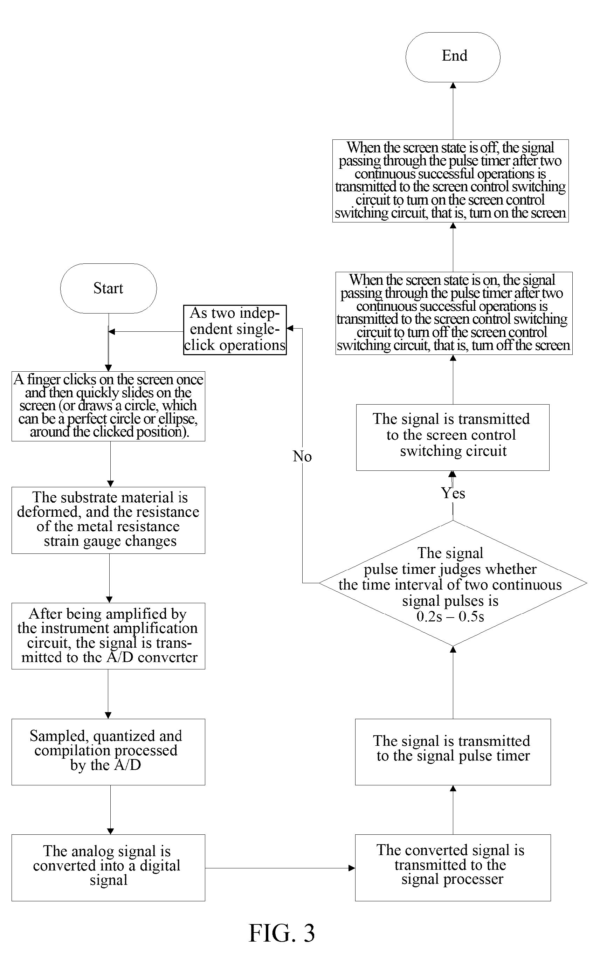

A first implementation method for controlling the screen state of a mobile phone, as shown in FIG. 2 and FIG. 3, comprises:
In step 1, it is to place the substrate material below the screen glass, the metal resistance strain gauge is adsorbed on the substrate material, when a user needs to turn on or off the phone screen, a finger continuously clicks twice on the screen (clicking twice may be continuously clicking the same position on the screen, or clicking two different positions on the screen), as shown in FIG. 2, or clicks on a screen once and then quickly slides on the screen once (or draws a circle, which can be a perfect circle or ellipse, around the clicked position), as shown in FIG. 3. The time interval of the two operations is 0.2s-0.5s, and the substrate placed below the screen is deformed due to the pressure.
In step 2, The substrate is deformed so that the metal resistance strain gauge on the substrate material also changes with the pressure, and the resistance of the metal resistance strain gauge changes.
In step 3, The resistance of the metal resistance strain gauge changes, which causes the voltage across its two ends to change, the signal with the voltage changing is transmitted to the instrument amplifier through the strain bridge circuit composed of the metal resistance strain gauges.
In step 4, After amplified by the instrument amplifier, the amplified voltage signal is transmitted to the A/D converter, and after being sampled, quantized and compilation processed by the A/D converter, the analog signal is converted into a digital signal.
In step 5, Through the electrical signal conversion processing by the A/D converter, the signal is transmitted to the signal processor, and the signal processor comprises a signal pulse timer and a screen control switching circuit.
In step 6, The signal is transmitted to the signal processor, and the signal pulses generated by two consecutive operations on the screen are timed by the signal pulse timer in the signal processor, when the time interval of the two consecutive signal pulses is within 0.2s-0.5s, the produced signal is transmitted to the screen control switching circuit, otherwise the signal cannot be transmitted to the screen control switching circuit.
In step 7, When the screen state is off, the signals passing through the pulse timer after two continuous successful operations are transmitted to the screen control switching circuit to turn on the screen control switching circuit, that is, the operation of turning on the screen; when the screen state is on, the signals passing through the pulse timer after two continuous successful operations are transmitted to the screen control switching circuit to turn off the screen control switching circuit, that is, the operation of turning off the screen.

The abovementioned method judges whether the first judgment result is that the time interval of two consecutive signal pulses is within 0.2s-0.5s, if not, then it is processed as two independent single-click operations, if it is within 0.2s-0.5s, the pulse signals will be sent to the screen control switching circuit so that the switching circuit turns off or on in accordance with the pulse signal. It is to avoid a conflict with an operation by the user on another application by touching the terminal screen, which makes it impossible to judge whether the user is to change the state of the terminal screen or performs another application. Meanwhile, the present invention further provides another method for controlling the mobile phone screen state, as follows.

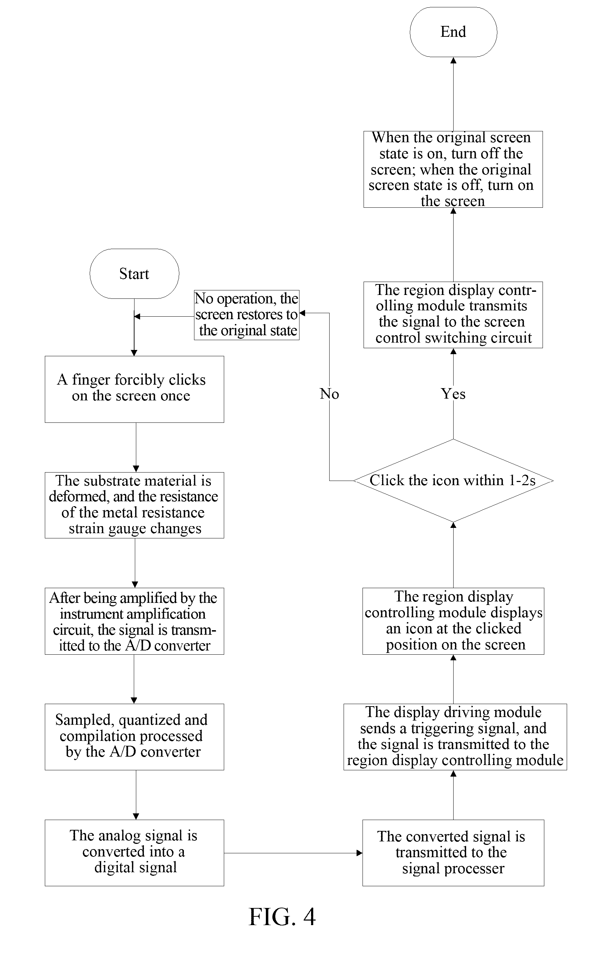

A second method for controlling the mobile phone screen state, as shown in FIG. 4, comprises:
In step 1, it is to place the substrate material below the screen glass, the metal resistance strain gauge is adsorbed on the substrate material. When it needs to turn on the screen, a finger clicks the screen once, the sensing element, the metal resistance strain gauge placed below the substrate will change following the pressure, so that the resistance of the resistance strain gauge changes.
In Step 2, The resistance of the metal resistance strain gauge changes, which causes the voltage across its two ends to also change, and the signal is transmitted to the instrument amplifier through the strain bridge circuit composed of the strain gauges.
In Step 3, After amplified by the instrument amplifier, the amplified voltage signal is transmitted to the A/D converter, and after being sampled, quantized and compilation processed by the A/D converter, the analog signal is converted into a digital signal.
In Step 4, Through the signal conversion by the A/D converter, the signal is transmitted to the signal processor, and the signal processor comprises a display driving module, a region display controlling module and a screen control switching circuit.
In Step 5, The signal is transmitted to the signal processor, after receiving the signal, the display driving module sends a triggering signal to the region display controlling module.
In step 6, The triggering signal transmitted by the display driving module is sent to the region display controlling module, and the region display controlling module displays an icon at the clicked position on the screen, and clicks the icon (if the icon is not clicked within 1-2s, the screen restores to the original state).
In Step 7, After clicking the icon, the region display controlling module transmits the signal to the screen control switching circuit.
In Step 8, When the screen is in the on state, the signal is transmitted to the screen control switching circuit to turn off the screen control switching circuit, that is, turn off the screen; when the screen is in the off state, the signal is transmitted to the screen control switching circuit to turn on the screen control switching circuit, that is, turn on the screen.

The displaying of the display icon is triggered according to the digital signal, and the display icon may comprise a statement prompting the user whether to turn on or off the phone screen, when the user clicks the display icon within the second predetermined time, a triggering signal is sent to the screen control switching circuit, so that the switching circuit turns off or on according to the triggering signal. Herein the second predetermined time can be 1-2s, if the user does not click the display icon within the second predetermined time, the screen restores to the original state.

Currently, the mobile phone turning on or off the screen is achieved mainly through a physical power button operation, and the physical buttons bring a lot of inconveniences due to their materials, sizes, hardness of the buttons and other factors, at the same time, different groups of peoples have different palm sizes, resulting in that the availability of physical buttons is difficult to meet various needs of users. The embodiment of the present invention implements the operation of turning on or off the phone screen through a circuit signal change produced by the touch screen in conjunction with the piezoresistive pressure sensor technology, thus greatly enhancing the user experience satisfaction.

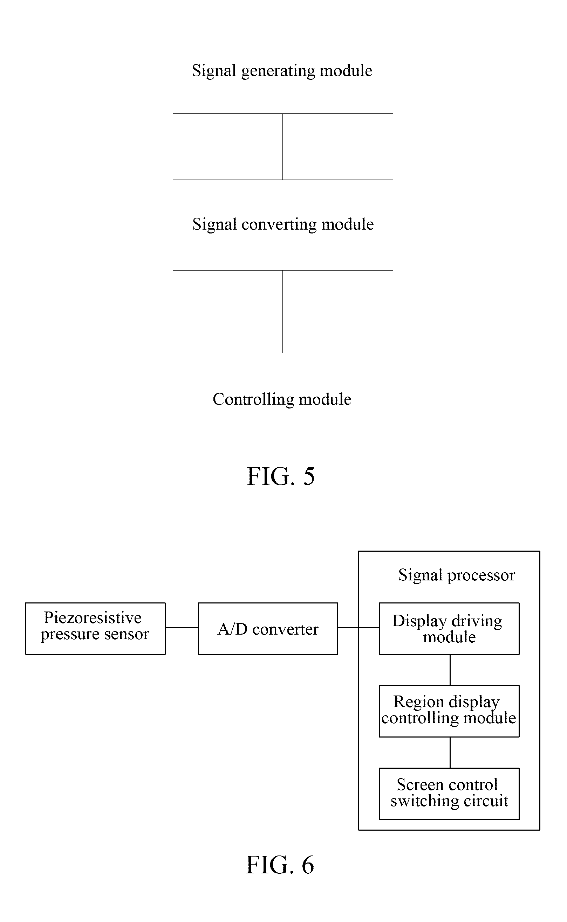

To achieve the abovementioned objective, the embodiment of the present invention further provides a screen state control device used for a touchscreen terminal, the touchscreen terminal comprises: a piezoresistive pressure sensor placed below the terminal screen, wherein the metal resistance strain gauge is adsorbed on the substrate material of the piezoresistive pressure sensor;
the screen state control device, as shown in FIG. 5, comprises:
a signal generating module, configured to: generate an analog signal according to a pressure on the terminal screen;
a signal converting module, configured to: convert the pressure signal into a digital signal; and
a controlling module, configured to: control the screen state of the terminal to switch between on and off according to the digital signal.

Preferably, the signal generating module is configured to: generate a voltage analog signal through a piezoresistive pressure sensor according to the pressure on the terminal screen.

Preferably, the controlling module is configured to control the screen control switching circuit of the terminal to switch between on and off in accordance with the digital signal.

Preferably, the digital signal is a pulse signal;
the controlling module comprises:
a first judging module, configured to judge whether a time interval of two adjacent pulse signals generated is less than a first predetermined time, to obtain a first judgment result,
a first sending module, configured to: when the first judgment result indicates that the time interval of two adjacent pulse signals generated is less than the first predetermined time, send the pulse signal to the screen control switching circuit so that the switching circuit switches between on and off in accordance with the pulse signal.

Preferably, the controlling module comprises:
a triggering module, configured to trigger displaying of a display icon according to the digital signal;
a second judging module, configured to judge whether the display icon is clicked in the second predetermined time, to obtain a second judgment result;
a second sending module, configured to: when the second judgment result indicates that the display icon is clicked within the second predetermined time, send a triggering signal to the screen control switching circuit so that the switching circuit can switch between on and off in accordance with the triggering signal.

In order to achieve the abovementioned objective, the embodiment of the present invention further provides a touchscreen terminal, as shown in FIG. 6, comprising a piezoresistive pressure sensor, and the piezoresistive pressure sensor comprises a metal resistance strain gauge, wherein the piezoresistive pressure sensor is placed below the screen of the touchscreen terminal, and the metal resistance strain gauge is adsorbed on the substrate material of the piezoresistive pressure sensor;
the touchscreen terminal further comprises an A/D converter and a signal processor, wherein,
the piezoresistive pressure sensor is configured to: generate a voltage analog signal according to the pressure on the screen of the touchscreen terminal;
the A/D converter is configured to: convert the voltage analog signal into a digital signal;
the signal processor is configured to: according to the digital signal, control the screen state of the touchscreen terminal to switch between on and off.

Wherein, the signal processor comprises a screen control switching circuit, and the signal processor is configured to control the screen control switching circuit of the touchscreen terminal to switch between on and off according to the digital signal.

Wherein, the signal processor further comprises a display driving module and a region display controlling module;
the display driving module is configured to: send a triggering signal to the region display controlling module after receiving the digital signal;
the region display controlling module is configured to: display an icon at the position clicked on the screen after receiving the triggering signal, and send a control signal to the screen control switching circuit after the icon is clicked;
the screen control switching circuit is configured to: when receiving the control signal when the screen state is on, turn off the screen; when receiving the control signal when the screen state is off, turn on the screen.

Those ordinarily skilled in the art can understand that all or some of steps of the abovementioned method may be completed by the programs instructing the relevant hardware, and the abovementioned programs may be stored in a computer-readable storage medium, such as read only memory, magnetic or optical disk. Alternatively, all or some of the steps of the abovementioned embodiments may also be implemented by using one or more integrated circuits. Accordingly, each module/unit in the abovementioned embodiments may be realized in a form of hardware, or in a form of software function modules. The present invention is not limited to any specific form of hardware and software combinations.

The above description is the preferred embodiments of the present invention, and it should be pointed out that, for a person skilled in the art, various improvements and modifications can be made without departing from the principle of the present invention, and these improvements and retouching should be considered within the claims of the present invention.

### Industrial Applicability

The embodiment of the present invention uses the resistance strain gauge currently widely used in the piezoresistive pressure sensor to sense operations on the terminal screen to obtain an analog signal, which has a very low price, high accuracy and good linearity.

## Claims

1. A screen state control method, comprising:
a piezoresistive pressure sensor placed below a screen of a touchscreen terminal generating an analog signal according to a pressure on the screen of the touchscreen terminal;
converting the analog signal into a digital signal;
controlling a screen state of the touchscreen terminal to switch between on and off according to the digital signal.

2. The screen state control method of claim 1, wherein, the step of generating an analog signal according to a pressure on the screen of the touchscreen terminal comprises: generating a voltage analog signal according to the pressure on the screen of the touchscreen terminal.

3. The screen state control method of claim 1 or 2, wherein, the step of controlling a screen state of the terminal to switch between on and off according to the digital signal comprises: controlling a screen control switching circuit of the touchscreen terminal to switch between off and on in accordance with the digital signal.

4. The screen state control method of claim 3, wherein, the digital signal is a pulse signal; the step of controlling a screen control switching circuit of the touchscreen terminal to switch between on and off in accordance with the digital signal comprises:
judging whether a time interval of two adjacent pulse signals generated is less than a first predetermined time, to obtain a first judgment result;
when the first judgment result indicates that the time interval of two adjacent pulse signals generated is less than the first predetermined time, sending the pulse signal to the screen control switching circuit so that the switching circuit switches between on and off in accordance with the pulse signal.

5. The screen state control method of claim 3, wherein, the step of controlling a screen control switching circuit of the terminal to switch between on and off in accordance with the digital signal comprises:
triggering displaying of a display icon according to the digital signal;
judging whether the display icon is clicked within a second predetermined time, to obtain a second judgment result;
when the second judgment result indicates that the display icon is clicked within the second predetermined time, sending a triggering signal to the screen control switching circuit so that the switching circuit can switch between on and off in accordance with the triggering signal.

6. A screen state control device, used for a touchscreen terminal, wherein the screen state control device comprises:
a signal generating module, configured to: generate an analog signal according to a pressure on a screen of the touchscreen terminal;
a signal converting module, configured to: convert the pressure signal into a digital signal; and
a controlling module, configured to: control the screen state of the touchscreen terminal to switch between on and off according to the digital signal.

7. The screen state control device of claim 6, wherein, the signal generating module is configured to: generate a voltage analog signal through a piezoresistive pressure sensor according to the pressure on the terminal screen.

8. The screen state control device of claim 6 or 7, wherein, the controlling module is configured to: control a screen control switching circuit of the touchscreen terminal to switch between on and off in accordance with the digital signal.

9. The screen state control device of claim 8, wherein, the digital signal is a pulse signal;
the controlling module comprises:
a first judging module, configured to: judge whether a time interval of two adjacent pulse signals generated is less than a first predetermined time, to obtain a first judgment result,
a first sending module, configured to: when the first judgment result indicates that the time interval of two adjacent pulse signals generated is less than the first predetermined time, send the pulse signal to the screen control switching circuit so that the screen switching circuit switches between on and off in accordance with the pulse signal.

10. The screen state control device of claim 8, wherein, the controlling module comprises:
a triggering module, configured to: trigger displaying of a display icon according to the digital signal;
a second judging module, configured to: judge whether the display icon is clicked in a second predetermined time, to obtain a second judgment result;
a second sending module, configured to: when the second judgment result indicates that the display icon is clicked within the second predetermined time, send a triggering signal to the screen control switching circuit so that the switching circuit can switch between on and off in accordance with the triggering signal.

11. A touchscreen terminal, comprising: a piezoresistive pressure sensor, wherein the piezoresistive pressure sensor comprises a metal resistance strain gauge, and the piezoresistive pressure sensor is placed below the screen of the touchscreen terminal, and the metal resistance strain gauge is adsorbed on a substrate material of the piezoresistive pressure sensor;
the touchscreen terminal further comprises an A/D converter and a signal processor, wherein,
the piezoresistive pressure sensor is configured to: generate a voltage analog signal according to the pressure on the screen of the touchscreen terminal;
the A/D converter is configured to: convert the voltage analog signal into a digital signal; the signal processor is configured to: control a screen state of the touchscreen terminal to switch between on and off according to the digital signal.

12. The touchscreen terminal of claim 11, wherein, the signal processor comprises a screen control switching circuit, and the signal processor is configured to: control the screen control switching circuit of the touchscreen terminal to switch between on and off according to the digital signal.

13. The touchscreen terminal of claim 12, wherein, the signal processor further comprises a display driving module and a region display controlling module;
the display driving module is configured to: send a triggering signal to the region display controlling module after receiving the digital signal;
the region display controlling module is configured to: display an icon at a position clicked on the screen after receiving the triggering signal, and send a control signal to the screen control switching circuit after the icon is clicked;
the screen control switching circuit is configured to: when receiving the control signal when the screen state is on, turn off the screen; when receiving the control signal when the screen state is off, turn on the screen.
